# EUROPEAN PATENT APPLICATION

(11) **EP 4 456 228 A1**
(43) Date of publication of application: **30.10.2024**
(21) Application number: 24163157.1
(22) Date of filing: 13.03.2024
(51) Int. Cl.: H01M 10/04, H01M 10/0587, H01M 50/449, H01M 50/46

(54) **SEPARATOR FOR SECONDARY BATTERY AND ELECTRODE ASSEMBLY COMPRISING THE SEPARATOR AND SECONDARY BATTERY**

(30) Priority: 15.03.2023 KR 20230034100
(71) Applicant: SK On Co., Ltd., Seoul 03161 (KR)
(72) Inventor: PARK, Sun Min, 34124 Daejeon (KR); KIM, Dong Ju, 34124 Daejeon (KR); KIM, Sang Mo, 34124 Daejeon (KR); OH, Won Je, 34124 Daejeon (KR); CHOI, Seung Won, 34124 Daejeon (KR); JEONG, Taek Eon, 34124 Daejeon (KR); HWANG, Ju Won, 34124 Daejeon (KR)
(74) Representative: Bird & Bird LLP

(57) **Abstract**

The disclosed technology relates to a separator for a secondary battery, an electrode assembly comprising the separator and a secondary battery comprising the electrode assembly. The separator comprises a porous substrate, and the separator comprises an adhesive layer on at least one surface of a distal end thereof.

## Description

### TECHNICAL FIELD

The technology and implementations disclosed in this patent document generally relate to a separator for a secondary battery, an electrode assembly comprising the separator and a secondary battery.

### BACKGROUND

In manufacturing a conventional battery, an electrode stack is generally manufactured by stacking a negative electrode and a positive electrode, and for an alignment of the electrode stack, an outermost portion of the electrode stack is wound one or more times using the separator or a new separate separator, and the separator is finished with tape.

However, when the separator is finished using the tape as described above, an alignment of electrodes may be disturbed during a taping process. Such a disturbance of electrode alignment may cause the formation of lithium dendrites on a surface of a negative electrode during a charging and discharging process of a battery.

### SUMMARY

The disclosed technology can be implemented in some embodiments to provide a separator for a secondary battery, an electrode assembly including the separator, and a secondary battery including the electrode assembly, and to provide a separator capable of easily finishing a separator of an electrode assembly.

In addition, the disclosed technology is to provide a separator capable of maintaining adhesion even after an electrolyte is injected, thereby maintaining alignment of an electrode assembly.

In some embodiments of the disclosed technology, provided is a separator including a porous substrate, the separator including: an adhesive layer on at least one surface of a distal end thereof.

The adhesive layer may be formed of an adhesive composition including at least one adhesive layer binder selected from the group consisting of PVDF, PVDF-HFP, SBR, CMC, H-NBR and PAA-PVA, and a solvent.

The solvent may be at least one selected from the group consisting of acetone, acetonitrile, methyl isoamyl ketone, methyl isobutyl ketone, methyl n-propyl ketone, propylene carbonate, n-butyl acetate, tetrahydrofuran and water.

The adhesive composition may have a viscosity of 20 to 80 cps at 25°C.

The adhesive composition may have a contact angle with respect to the separator of 15 to 80°.

The porous substrate may include an inorganic coating layer on at least one surface.

The inorganic coating layer may include inorganic particles and a coating layer binder, and the coating layer binder may be identical to or different from the adhesive layer binder.

In another embodiment of the disclosed technology, provided is an electrode assembly, including: an electrode stack in which at least one positive electrode and at least one negative electrode are alternately stacked with a separator as a boundary; and a separator winding unit configured to wind an outermost portion of the electrode stack with a separator one or more time, wherein a separator of the separator winding unit includes an adhesive layer on an inner surface facing an electrode assembly as a distal region, and the distal region of the separator winding unit is adhesively fixed by the adhesive layer.

The separator of the separator winding unit may be formed by extending a separator of the electrode stack.

The electrode stack may be a stacked electrode stack in which at least one negative electrode, at least one positive electrode, and a separator between the negative electrode and the positive electrode are respectively interposed and stacked.

The separator of the separator winding unit is formed by extending any one of the separators of the electrode stack.

In the electrode stack, at least one negative electrode, at least one positive electrode, and a separator between the negative electrode and the positive electrode may be interposed and stacked, and the separator may be a stacked electrode stack folded in a zigzag shape between the positive electrode and the negative electrode.

In the electrode stack, at least one negative electrode, at least one positive electrode, and a separator between the negative electrode and the positive electrode may be interposed and stacked, and the separator may be a winding-type electrode stack folded in one direction and interposed between the positive electrode and the negative electrode.

The electrode stack may be a jelly roll-type electrode stack formed by winding a stack of a rectangular negative electrode, a rectangular positive electrode, and two or more rectangular separators in one direction.

The separator of the separator winding unit may be formed by extending any one of the separators of the electrode stack.

The separator of the separator winding unit may be a separator disposed inside an electrode stack, and may wind the electrode stack two or more times.

The adhesive layer may include at least one adhesive layer binder selected from the group consisting of PVDF, PVDF-HFP, SBR, CMC, H-NBR, and PAA-PVA.

The separator may include a porous substrate and an inorganic coating layer on at least one surface of the porous substrate.

The inorganic coating layer may include inorganic particles and a coating layer binder.

The coating layer binder may be identical to or different from the adhesive layer binder.

In another embodiment of the disclosed technology, provided is a secondary battery including: a battery case; and any one of the above-described electrode assemblies disposed in the battery case.

The battery case may be a pouch case.

By a distal adhesive layer included in a separator provided in the disclosed technology, an attachment to the separator may be performed, thereby firmly maintaining an alignment of electrodes in an electrode assembly in a process of inserting a battery case.

A separator according to an embodiment of the disclosed technology may prevent problems such as loss of adhesion due to an electrolyte injected into a battery case, and thus, the separator may be deviated to generate wrinkles on a surface of a battery or prevent interference of the separator during sealing, thereby improving battery safety.

A separator of the disclosed technology may be widely applied in green technology fields such as an electric vehicle, a battery charging station, and other solar power generation and wind power generation using batteries. In addition, the separator of the disclosed technology may suppress air pollution and greenhouse gas emissions and may be used in an eco-friendly electric vehicle, a hybrid vehicle, and the like, so as to prevent climate change.

### BRIEF DESCRIPTION OF DRAWINGS

Certain aspects, features, and advantages of the disclosed technology are illustrated by the following detailed description with reference to the accompanying drawings.
FIG. 1 is an example of an electrode assembly in which a separator is finished by tape, and is a view schematically illustrating a cross-section of a stacked electrode assembly.
FIG. 2 is a view schematically illustrating a plane of a separator provided according to an embodiment of the disclosed technology.
FIG. 3 is a view schematically illustrating a longitudinal cross-section of a separator provided according to an embodiment of the disclosed technology.
FIG. 4 is a view schematically illustrating a transverse cross-section of an end of a separator including a separator adhesive layer, as a separator provided according to an embodiment of the disclosed technology.
FIG. 5 is an example of an electrode assembly manufactured using a separator according to an embodiment of the disclosed technology, and is a view schematically illustrating a stacked electrode assembly in which an outermost portion of an electrode stack formed by interposing an individual separator sheet between a positive electrode and a negative electrode is wound using a separate separator.
FIG. 6 is an example of an electrode assembly manufactured using a separator according to an embodiment of the disclosed technology, and is a cross-sectional view schematically illustrating a stack solution folding type electrode assembly in which a separator is folded in a zigzag shape.
FIG. 7 is another example of an electrode assembly manufactured using a separator according to an embodiment of the disclosed technology, and is a cross-sectional view schematically illustrating a stack solution folding type electrode assembly in which a separator is folded in a winding type.
FIG. 8 is another example of an electrode assembly manufactured using a separator according to an embodiment of the disclosed technology, and is a cross-sectional view schematically illustrating a jelly roll-type electrode assembly formed by winding a long electrode and a separator in a winding type.
FIG. 9 is a graph illustrating results obtaining by measuring adhesion of an adhesive layer formed on a separator in the electrode assemblies manufactured in Examples 1 to 6 and Comparative Example 1.
FIG. 10 illustrates results of evaluating the permeability of a separator by dropping adhesive compositions of Examples 1 to 3 and Examples 7 to 9 onto a separator in which five sheets are stacked, where FIG. 10A is an image of a separator onto which the adhesive composition was dropped, FIG. 10B is an image of a dried surface of a separator by naturally evaporating a solvent by dropping the adhesive composition and leaving the adhesive composition, and FIG. 10C is an image of a surface of a separator disposed in a second position.
FIG. 11 is a graph illustrating results of evaluating discharge capacities per rate of 0.2C, 0.5C, 1.0C, and 2.0C for batteries that use electrode assemblies of Example 1 and Comparative Example 1.

### DETAILED DESCRIPTION

Hereinafter, the disclosed technology will be described in more detail with reference to the accompanying drawings. However, this is merely illustrative and the technology is not limited to specific embodiments described exemplarily.

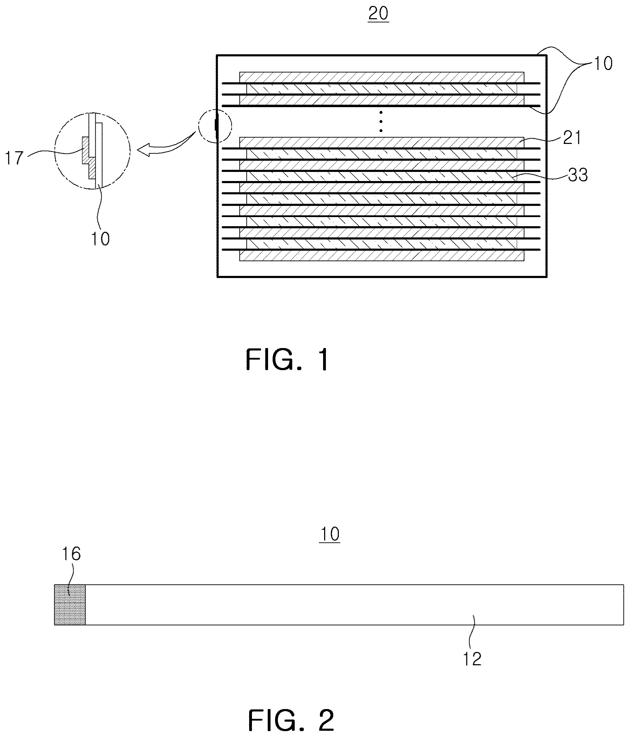

In general, a separator disposed in an outermost portion of an electrode stack is finished by fixing a distal end of the separator to the electrode stack. The fixing of the separator to the electrode stack is finished using tape, which is schematically illustrated in FIG. 1.

However, when finishing a separator 10 using tape 17 as described above, an alignment of electrodes may become disturbed during a taping process.

Furthermore, the tape 17 used to finish the separator may lose adhesion thereof due to an electrolyte depending on the type of adhesive, and in this case, the separator 10 may be deviated, and may interfere between battery cases during a sealing process, which may insulation defects.

The disclosed technology provides a separator, and the separator includes a porous substrate. The porous substrate may specifically be a porous polymer film substrate or a porous polymer nonwoven fabric substrate.

The porous substrate may be one commonly used as a separator for a lithium ion secondary battery, and may be formed of, for example, at least one or two or more types of copolymers selected from the group consisting of high-density polyethylene, low-density polyethylene, linear low-density polyethylene, polyethylene such as ultra-high molecular weight polyethylene, polypropylene, polyethylene terephthalate, polypropylene terephthalate, polybutylene, polybutylene terephthalate, polypentene, polyacetal, polyester, polyamide, polycarbonate, polyimide, polyamideimide, polyetherimide, polyetheretherketone, polyether sulfone, polyphenylene oxide, polyphenylene sulfide and polyethylene naphthalate.

Furthermore, the porous substrate may be formed in a structure in which two or more layers of substrate are stacked, and each layer may be identical to each other. Additionally, the porous substrate may be formed of a polymer that is a mixture of two or more types.

Another embodiment of a separator provided in the disclosed technology may include an inorganic coating layer on one surface or both surfaces of the porous substrate. The inorganic coating layer is intended to secure the heat resistance of the separator and improve safety, and may be formed by coating a mixture of excess inorganic particles and binder polymer.

The inorganic particles included to form the inorganic coating layer are not limited thereto, but may be, for example, at least one selected from the group consisting of aluminum hydroxide (Al(OH)₃), magnesium hydroxide (Mg(OH)₂), aluminum oxide (Al₂O₃), magnesium oxide (MgO), calcium oxide (CaO), barium sulfate (BaSO₄), Boehmite, titanium dioxide (TiO₂), silica (SiO₂), and clay.

The binder used in forming the inorganic coating layer may be, for example, polymethylmethacrylate, polybutylacrylate, polyacrylonitrile, polyvinylpyrrolidone, polyvinylacetate, ethylene-vinylacetate copolymer, and polyethylene oxide, and any one of these may be selected and used, and two or more types may be mixed and used.

The binder may provide adhesion between inorganic particles and between inorganic particles and the porous substrate, but may act as a factor in increasing resistance, and thus, the inorganic coating layer may include a binder in an amount of 1 to 10 wt%.

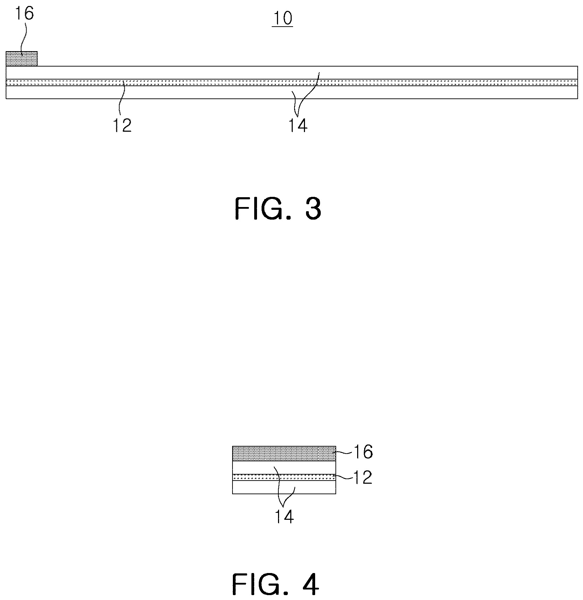

As described above, the separator of the disclosed technology may be a porous substrate or a porous substrate including an inorganic coating layer coated with inorganic particles on one surface or both surfaces of the porous substrate. An example of the separator is schematically illustrated in FIGS. 2 and 3.

FIG. 2 illustrates a separator 10 formed of a porous substrate 12. Furthermore, FIG. 3 illustrates a separator 10 in which an inorganic coating layer 14 is formed on a surface of a porous substrate 12, and the inorganic coating layer 14 may be formed on one surface or both surfaces of the porous substrate 12.

The separator 10 provided in the disclosed technology also includes an adhesive layer 16. The adhesive layer 16 serves to fix the separator 10 after winding an outermost portion of the electrode stack in which a positive electrode and a negative electrode are stacked with the separator 10 as a boundary, one or more times using the separator. Accordingly, the adhesive layer 16 may be formed on one surface of the separator, specifically, on a surface facing an interior of the electrode assembly.

The adhesive layer 16 may be formed of an adhesive composition including a binder and a solvent. The binder may use at least one selected from the group consisting of polyvinylidene fluoride-hexafluoropropylene (PVDF-HFP), PVDF (polyvinylidenedifluoride), polyvinylidenedifluoride-hexafluoropropylene (PVDF-HFP), styrene butadiene rubber (SBR), carboxymethyl cellulose (CMC), hydrogenated nitrile butadiene rubber (H-NBR) and polyacrylamide-polyvinylacetate (PAA-PVA), and more specifically, may use PVDF-HFP.

Furthermore, the solvent may use at least one selected from the group consisting of acetone, acetonitrile, water, methyl isoamyl ketone, methyl isobutyl ketone, methyl n-propyl ketone, propylene carbonate, n-butylacetate, and tetrahydrofuran, and more specifically, may use acetone.

By utilizing the binder and solvent as described above, after adhesion, binder components do not penetrate into an electrode mixture layer and evaporate and dry quickly, and excellent adhesion to the separator may be provided and side reactions with the positive electrode, the negative electrode and the electrolyte may not be caused, and also, it may be possible to prevent weakening of adhesion even after electrolyte injection.

An adhesive used in tape may maintain adhesion before a electrolyte liquid injection process, thereby fixing the separator and preventing a battery from disintegrating. However, after liquid electrolyte injection process, as the battery becomes more advanced, a width and thickness of the battery are changed to make it difficult to maintain the adhesion, which may cause the separator to be deviated, and may interfere with a sealing process to cause insulation defects.

As an embodiment, when the separator 10 includes an inorganic coating layer 14, the inorganic coating layer 14 may include inorganic particles, a binder, and a solvent, but a binder and a solvent of the adhesive layer 16 may be different from a composition used to form the inorganic coating layer 14, especially the binder. For example, when using the same binder as the binder used in the inorganic coating layer 14, the binder of the inorganic coating layer 14 may be dissolved in the solvent included in the adhesive layer 16, and thus, the adhesion of the inorganic coating layer 14 to the porous substrate 12 may be weakened. Accordingly, inorganic particles of the inorganic coating layer 14 may be easily separated from the porous substrate 12, which may reduce the fixation of a distal end of the separator 10 by the adhesive layer 16.

An adhesive composition of the adhesive layer may have a contact angle of 15° or more and 80° or less with respect to the separator. When the contact angle is less than 15°, the adhesive composition flows out to have poor workability, and when the contact angle exceeds 80°, a phenomenon of rolling in a drop shape on the separator may occur. For example, the contact angle may be 35° or more, 75° or less, 70° or less, and may also be 55° or less. When the contact angle is in the aforementioned range, the adhesion of the adhesive composition to the separator may be improved.

Furthermore, the adhesive composition may have a viscosity ranging from 20 to 105 cps at a temperature of 25°C. When the viscosity of the adhesive composition is less than 20 cps, the adhesive composition may flow from the separator, and when the viscosity of the adhesive composition exceeds 105 cps, it may be difficult to uniformly form an adhesive layer on the separator. The viscosity of the adhesive composition may be, for example, 20 cps or more, 25 cps or more, 30 cps or more, or 35 cps or more, and the viscosity of the adhesive composition may be, for example, 105 cps or less, 102 cps or less, 95 cps or less, or 90 cps or less.

The viscosity and a contact angle of the adhesive may be affected by various causes, but are not limited thereto, but the adhesive composition may include, for example, a binder in an amount of 10 to 20 wt%. When the amount of the binder is less than 10 wt%, adhesiveness may be insufficient and the viscosity may be less than 20cps, and when the amount of the binder exceeds 20 wt%, the contact angle between the adhesive composition and the separator may increases, which may reduce adhesiveness. Specifically, the amount of the binder may be 18 wt% or less or 16 wt% or less, and more specifically, 15 wt%.

The adhesive layer 16 may be formed in one distal end of the separator 10 exposed to the outermost portion of the electrode assembly 20, and there is no particular limitation on a location or a size thereof. However, in order to prevent folding of the separator 10, the adhesive layer 16 may formed in a distal region including a distal end of the separator 10, as illustrated in FIGS. 2 and 3, or the adhesive layer 16 may formed throughout a transverse direction (i.e., a width direction, perpendicular to the longitudinal direction of the separator 10), as illustrated in FIG. 4.

The separator 10 may be wound around the outermost portion of the electrode stack one or more times. The number of windings may be the number of times required for alignment of the electrode stack, and is not particularly limited, and the number of windings may be, for example, one or more times or five times or less. When the number of windings is significantly high, the separator 10 may cause an increase in the thickness of the electrode assembly 20, resulting in a decrease in capacity.

When winding the separator 10 around the outermost portion of the electrode stack, the adhesive layer 16 may be disposed on one surface (electrode surface) of the electrode assembly 20 corresponding to a surface of the electrode, or on one surface (stacked surface) of the electrode assembly 20 corresponding to an electrode thickness, and more specifically, the separator 10 may be wound so that the adhesive layer 16 is disposed on the stacked surface. In a case in which the adhesive layer 16 is disposed on the stacked surface of the electrode assembly 20, when constructing a module by stacking a plurality of electrode assemblies 20, that is, a plurality of batteries built into a battery case, especially a pouch case, the adhesive layer 16 may be disposed in a specific direction, thereby preventing thickness deviation of the batteries stacked within the module, and preventing pressure deviation caused by thickness deviation.

The finish of the separator may ensure that the alignment of the electrodes may be firmly maintained in a process of manufacturing, transporting and storing the electrode assembly or in a process of inserting the electrode assembly into the battery case, thus preventing folding or deviation of the separator from the alignment, and accordingly, wrinkles may be prevented from being formed on a battery surface, and interference with the separator when sealing the pouch case may be prevented.

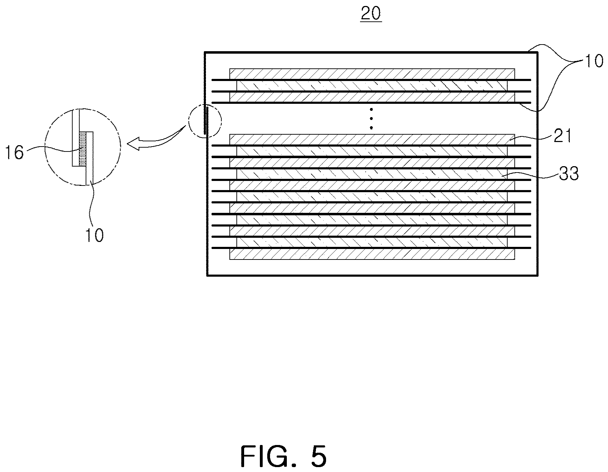

As illustrated in FIG. 5, the electrode stack may be a stacked electrode stack formed by stacking a positive electrode and a negative electrode with an individual separator sheet interposed therebetween. In this case, any one of the separators forming the electrode stack, for example, a separator disposed in the outermost portion of the electrode stack may be used as a rectangular separator having a long length in one direction, and may be wound and finished one or more times, thus manufacturing an electrode assembly. Furthermore, as illustrated in FIG. 5, a separate rectangular separator is used, and is wound and finished around the outermost portion of the electrode stack one or more times, thus manufacturing an electrode assembly. In this case, the adhesive layer may be formed on the distal end of the separator wound around the outermost portion of the electrode stack.

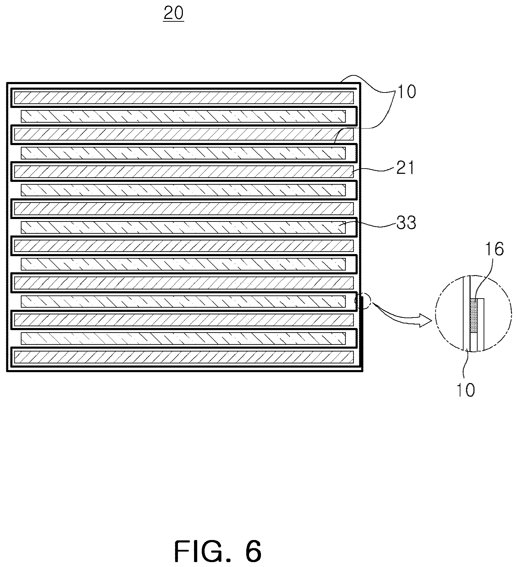

As illustrated in FIG. 6, the electrode stack may be a stack-and-fold type electrode stack in which a positive electrode and a negative electrode are alternately stacked by inserting the positive electrode and the negative electrode while folding one long rectangular separator in a zigzag shape, and the separator may be extended and may be wound and finished around the outermost portion of the electrode stack one or more times, thus manufacturing an electrode assembly. In this case, the adhesive layer may be formed on the distal end of the separator wound around the outermost portion of the electrode stack. Furthermore, although not illustrated in the drawings, as illustrated in FIG. 5, a separator having an adhesive layer formed thereon, apart from the separator used in the electrode stack, may be used, and may be wound and finished around the electrode stack one or more times.

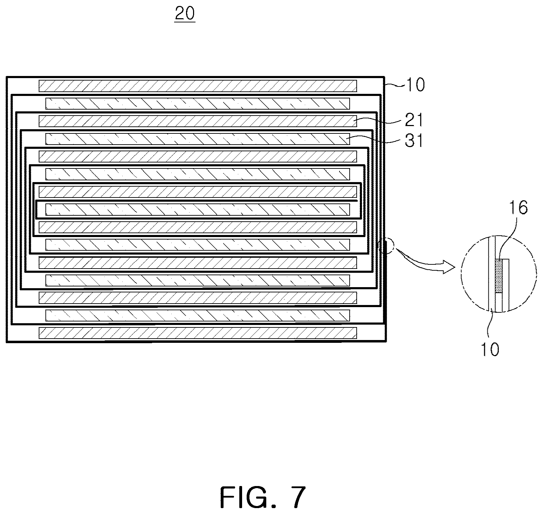

Furthermore, as illustrated in FIG. 7, the electrode stack may be a winding-type electrode stack formed by winding a rectangular separator around an electrode of one polarity in one direction and stacking a negative electrode and a positive electrode with the separator as a boundary, and the separator may be extended, and may be wound and finished around the outermost portion of the electrode stack one or more times, thus manufacturing an electrode assembly. In this case, the adhesive layer may be formed on the distal end of the separator wound around the outermost portion of the electrode stack. Furthermore, although not illustrated in the drawings, as illustrated in FIG. 5, a separator having an adhesive layer formed thereon, apart from the separator used in the electrode stack, may be used, and may be wound and finished around the electrode stack one or more times.

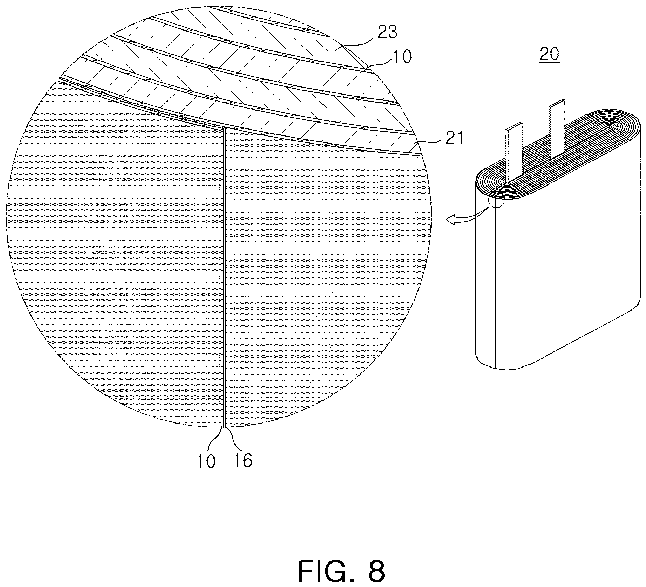

Furthermore, as illustrated in FIG. 8, the electrode stack may be a jelly roll-type electrode stack formed by winding a separator in one direction together in a state in which rectangular positive and negative electrodes and the separator between the positive and negative electrodes are interposed in one direction. In this case, two or more separators may be used, and may have, for example, a stacked structure of positive electrode/separator/negative electrode/separator, or a stacked structure of separator/positive electrode /separator/negative electrode.

Any one of the plurality of separators may be extended, and may be wound around the electrode stack one or more times, and then a distal end thereof may attached to a main body of the electrode stack, thus manufacturing an electrode assembly. In this case, an adhesive layer may be formed on the distal end of the separator wound around the outermost portion of the electrode stack, and when a separator disposed further inside is extended into a separator for finishing, the separator may be wound one or more times, thereby improving adhesion stability. Furthermore, although not shown in the drawings, as illustrated in FIG. 5, a separator having an adhesive layer formed thereon, apart from the separator used in the electrode stack, may be used, and may be wound and finished around the electrode stack one or more times.

In the disclosed technology, the adhesive layer 16 may be disposed on an electrode surface of the electrode assembly, or may be disposed on a side surface of the electrode assembly, and is not particularly limited. However, for example, as exemplarily illustrated in FIGS. 5 to 8, the adhesive layer 16 may be disposed on the side face of the electrode assembly, thereby preventing an increase in the thickness of the electrode assembly, and preventing a decrease in capacity of the battery.

The separator provided in the disclosed technology may include a separator adhesive layer on the distal end of the separator to prevent the separator from being folded during a process, and to firmly maintain the alignment of the electrodes, which may further avoid the hassle of attaching separate tape for finishing.

Furthermore, according to an embodiment of the disclosed technology, since the separator adhesive layer is formed using a binder different from a binder of the inorganic coating layer formed on the porous substrate, there may be no side reaction with an electrode mixture and an electrolyte after injection of the electrolyte, and there may be no problem of loss of adhesion due to the electrolyte, and the safety of the battery may be improved by preventing separation of the separator to cause wrinkles on the surface of the battery, or preventing interference with the separator during sealing.

### Example

Hereinafter, the disclosed technology will be described in more detail through examples. The following example is an example of the disclosed technology and is not intended to limit the disclosed technology thereby.

### Examples 1 to 6

Adhesive compositions of Examples 1 to 6 were manufactured by dissolving a PVDF resin in an acetone solvent. The composition of the adhesive composition used in each example is illustrated in Table 1 below.

Table 1 shows the viscosity of each adhesive composition when measured using a Brookfield viscometer (Spindle 05) at 25°C.

### Comparative Example 1

An adhesive composition dissolved in an acetonitrile solvent in an amount of 3 wt% of polyethylene oxide was manufactured.

**Table 1:**

| | | Binder(wt%) | | Solvent (wt%) | | Viscosity (cps) |
|---|---|---|---|---|---|---|
| Example | 1 | PVDF | 10 | Acetone | 90 | 38 |
| | 2 | PVDF | 11 | Acetone | 89 | 52 |
| | 3 | PVDF | 12 | Acetone | 88 | 64 |
| | 4 | PVDF | 13 | Acetone | 87 | 72 |
| | 5 | PVDF | 14 | Acetone | 86 | 88 |
| | 6 | PVDF | 15 | Acetone | 85 | 102 |
| Comparative Example | 1 | PEO | 3 | Acetonitrile | 97 | 115 |

### [Physical Evaluation]

### - Adhesion Evaluation-

Two sheets of adhesive compositions of Examples 1 to 6 and Comparative Example 1 described above were prepared by cutting a separator (product name: T13-703 DXB) provided by SKIET into a size of 10 cm×5 cm, and then, an adhesive composition was applied to a distal end of one sheet of separator, and the other sheet of separator was superimposed and attached to the one sheet.

After one hour, each of the separators that were not attached was tied to a test machine using the Universal Testing Machines (UTM) made by Instron and was then pulled to measure tensile strength thereof, thus measuring adhesion.

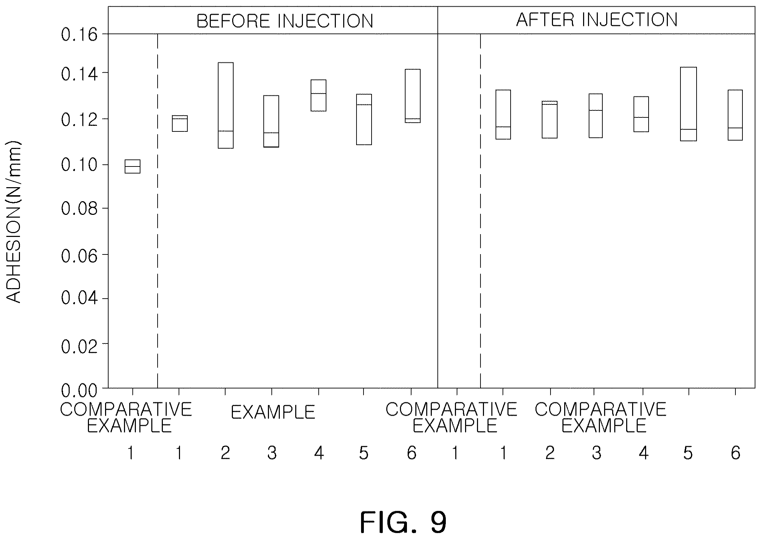

The adhesion was measured five times in this manner, and results thereof are shown in FIG. 9, and average values thereof are shown in Table 2.

On the other hand, after the separator to which the two sheets are attached was immersed in an electrolyte for one hour, the adhesion was measured five times in the same manner as described above, and the values and average values thereof are shown in FIG. 9 and Table 2.

**Table 2:**

| | | Adhesive force (N/mm) | |
|---|---|---|---|
| | | Before electrolyte immersion | After electrolyte immersion |
| Example | 1 | 0.118 | 0.120 |
| | 2 | 0.122 | 0.122 |
| | 3 | 0.117 | 0.122 |
| | 4 | 0.130 | 0.121 |
| | 5 | 0.121 | 0.123 |
| | 6 | 0.126 | 0.119 |
| Comparative Example | 1 | 0.099 | 0 |

As can be seen from FIG. 9 and Table 2, an adhesive layer formed using the adhesive composition of Comparative Example 1 was found to have the adhesion of 0.099 N/mm or more, and each adhesive layer formed using the adhesive compositions of Examples 1 to 6 was found to have the adhesion of 0.11 N/mm or more. From these results, when the adhesive composition provided in the disclosed technology is used, it was found that an equal or more excellent adhesion could be provided as compared to the adhesive composition of Comparative Example 1.

On the other hand, when examining the adhesion after impregnating the separator attached by the adhesive according to Examples 1 to 6 and Comparative Example 1 in an electrolyte, and in the case of Comparative Example 1, it was found that the adhesion of the adhesive layer was lost. This is because the adhesive is dissolved in the electrolyte. On the other hand, it was found that the adhesive layers of Examples 1 to 6 maintained the adhesion of about 0.11 to 0.14 N/mm even after being impregnated in the electrolyte, and, it could be evaluated that there was no difference in adhesion according to the content of the binder. This is because, unlike Comparative Example 1, the binder of the adhesive layer was not dissolved in the electrolyte.

### [Evaluation of Permeability of Separator]

In order to confirm the effect on the permeability according to the amount of the binder in the adhesive composition, except that 5 wt%, 7 wt%, and 9 wt% of PVDF were included, adhesive compositions were additionally manufactured in the same manner as in Example 1, and used together (in order, in Examples 7, 8 and 9).

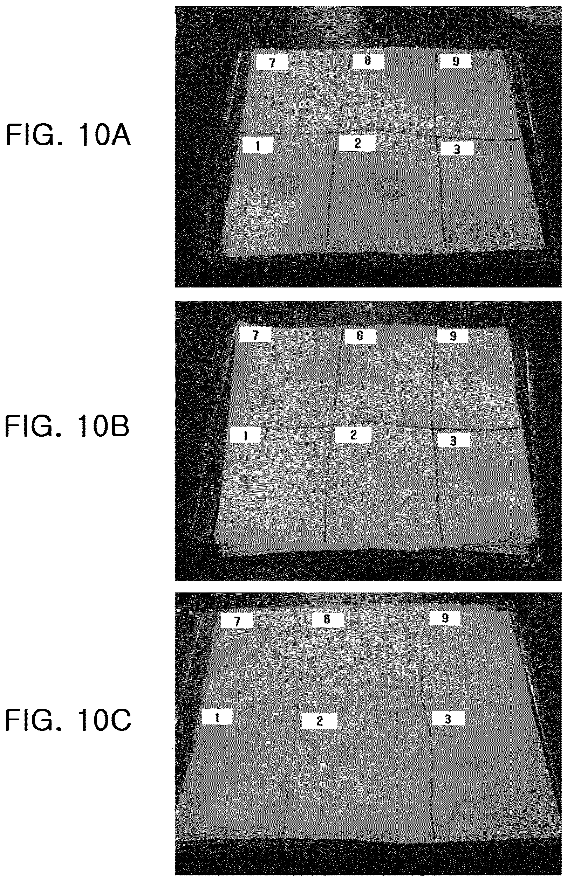

After stacking five sheets of separators, 0.1 ml of the adhesive compositions of Examples 1 to 3 and Examples 7 to 9 was dropped on the separator, respectively (FIG. 10A), and then left to naturally evaporate and dry the solvent (FIG. 10B). FIG. 10 illustrates states according to the content of PVDF, and the PVDF is shown in a Z-direction from an upper left to a lower right of FIG. 10 in the order of increasing the content of the PVDF.

Then, each separator disposed in a lower portion was observed to visually observe whether the adhesive composition was present, thereby evaluating permeability (FIG. 10C).

As a result of the observation of C in FIG. 10, in the case of Example 7 in which the content of PVDF was 5 wt%, the PVDF was observed even in a third separator, and in the case of Example 8 in which the content of the PVDF was 7 wt%, the PVDF was observed even in a second separator, but in Example 9 and Examples 1 to 3 in which the content of the PVDF was 9 wt% or more, the PVDF was not observed on a back surface of the first separator.

From these results, it was found that the permeability of the separator was suppressed when the adhesive composition according to the disclosed technology had a binder content of 9 wt% or more.

### [Measurement of Discharge Capacity]

As a separator in which a positive electrode and a negative electrode are alternately stacked and an inorganic material layer is formed on a porous PE substrate elongated in one direction, an electrode assembly was manufactured using a separator (product name: T13-703 DXB) provided by SKIET.

The electrode assembly has a structure as illustrated in FIG. 6, and was manufactured by folding the separator above in a zigzag shape and inserting a sheet of the negative electrode and the positive electrode between the separator. In this case, as illustrated in FIG. 6, the separator was wound one time around the manufactured electrode assembly, and the adhesive composition manufactured in Examples 1 to 6 was applied to a distal end of the separator to form an adhesive layer, and the adhesive layer was attached and fixed to the electrode assembly wound with the separator.

The electrode assembly manufactured using the adhesive compositions of Example 1 and Comparative Example 1 was inserted into a pouch case, and an electrolyte was injected thereinto and the pouch case was sealed to manufacture a pouch battery.

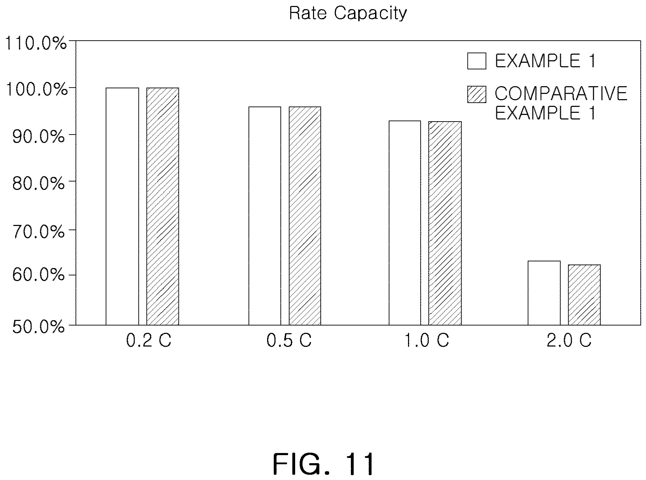

The discharge capacities per rate of 0.2C, 0.5C, 1.0C, and 2.0C were evaluated using the battery, and the results are shown in FIG. 11.

As can be seen from FIG. 11, when the adhesive layer is formed on the separator of the outermost portion of the electrode assembly using the adhesive composition according to the disclosed technology, it may be found that the discharge characteristics for each rate in the disclosed technology were equivalent to or superior to those of the case of using an adhesive generally used in the conventional art. From this, it was confirmed that the adhesive layer of the disclosed technology did not negatively affect battery characteristics.

## Claims

1. A separator comprising a porous substrate, the separator comprising:
an adhesive layer on at least one surface of a distal end thereof.

2. The separator of claim 1, wherein the adhesive layer is formed of an adhesive composition including at least one adhesive layer binder selected from the group consisting of PVDF, PVDF-HFP, SBR, CMC, H-NBR and PAA-PVA, and a solvent.

3. The separator of claim 2, wherein the solvent is at least one selected from the group consisting of acetone, acetonitrile, methyl isoamyl ketone, methyl isobutyl ketone, methyl n-propyl ketone, propylene carbonate, n-butyl acetate, tetrahydrofuran and water.

4. The separator of claim 2 or claim 3, wherein the adhesive composition has a viscosity of 20 to 105 cps at 25°C.

5. The separator of any one claim of claims 2 to 4, wherein the adhesive composition has a contact angle with respect to the separator of 15 to 80°.

6. The separator of any one claim of claims 1 to 5, wherein the porous substrate comprises an inorganic coating layer on at least one surface.

7. The separator of claim 6, wherein the inorganic coating layer comprises inorganic particles and a coating layer binder, and the coating layer binder is identical to or different from a binder of the adhesive layer.

8. An electrode assembly, comprising:
an electrode stack in which at least one positive electrode and at least one negative electrode are alternately stacked with a separator as a boundary; and
a separator winding unit configured to wind an outermost portion of the electrode stack with a separator one or more time,
wherein a separator of the separator winding unit comprises an adhesive layer on an inner surface facing an electrode assembly as a distal region, and the distal region of the separator winding unit is adhesively fixed by the adhesive layer.

9. The electrode assembly of claim 8, wherein the adhesive layer is disposed on a side surface of the electrode assembly.

10. The electrode assembly of claim 8 or claim 9, wherein the separator of the separator winding unit is formed by extending a separator of the electrode stack.

11. The electrode assembly of any one claim of claims 8 to 10, wherein the electrode stack is at least one selected from the group consisting of
i) a stacked electrode stack in which at least one negative electrode, at least one positive electrode, and separators between the negative electrode and the positive electrode are respectively interposed and stacked, and the separator of the separator winding unit is formed by extending any one of the separators of the electrode stack;
ii) a stacked electrode stack in which at least one negative electrode, at least one positive electrode, and a separator between the negative electrode and the positive electrode are interposed and stacked, and the separator is a stacked electrode stack folded in a zigzag shape between the positive electrode and the negative electrode;
iii) a winding-type electrode stack in which at least one negative electrode, at least one positive electrode, and a separator between the negative electrode and the positive electrode are interposed and stacked, and the separator is folded in one direction and interposed between the positive electrode and the negative electrode; and
iv) a jelly roll-type electrode stack formed by winding a stack of a rectangular negative electrode, a rectangular positive electrode, and two or more rectangular separators in one direction,

12. The electrode assembly of claim 11, wherein the electrode stack is the jelly roll-type electrode stack, and
a separator disposed inside the electrode stack is extended, and winds the electrode stack two or more times.

13. The electrode assembly of any one claim of claims 8 to 12, wherein the adhesive layer comprises at least one adhesive layer binder selected from the group consisting of PVDF, PVDF-HFP, SBR, CMC, H-NBR, and PAA-PVA.

14. The electrode assembly of any one claim of claims 8 to 13, wherein the separator comprises a porous substrate and an inorganic coating layer on at least one surface of the porous substrate.

15. A secondary battery comprising: a battery case;
and the electrode assembly of any one claim of claims 8 to 14 in the battery case.
